# EUROPÄISCHE PATENTSCHRIFT

(11) **EP 1 238 000 B1**
(45) Veröffentlichungstag und Bekanntmachung des Hinweises auf die Patenterteilung: **03.09.2003**
(21) Anmeldenummer: 00993321.9
(22) Anmeldetag: 22.11.2000
(51) Int. Cl.: C08K 3/10, C08K 3/22, C08L 21/00, E04B 1/82

(54) **GUMMIWERKSTOFF ZUR SCHALLISOLATION**
RUBBER-BASED SOUNDPROOFING MATERIAL
MATERIAU A BASE DE CAOUTCHOUC POUR L'INSONORISATION

(30) Priorität: 07.12.1999 DE 19958816; 10.05.2000 DE 10022838
(43) Veröffentlichungstag der Anmeldung: 11.09.2002
(73) Patentinhaber: FRAUNHOFER-GESELLSCHAFT ZUR FÖRDERUNG DER ANGEWANDTEN FORSCHUNG E.V., 80636 München (DE); Intech Thüringen GmbH, 99880 Waltshausen (DE)
(72) Erfinder: LOTZE, Gerd, 01069 Dresden (DE); ALBRACHT, Frank, 99880 Waltershausen (DE); KRAUSE, Karl-Heinz, 09123 Chemnitz (DE); MERKMANN, Gerhard, 99867 Gotha (DE); TIMM, Wolfgang, 99867 Gotha (DE)
(86) Internationale Anmeldenummer: DE0004204
(87) Internationale Veröffentlichungsnummer: WO01042343

(56) Entgegenhaltungen:
- US-A- 4 189 424
- US-A- 5 824 728
- PATENT ABSTRACTS OF JAPAN vol. 013, no. 451 (C-643), 11. Oktober 1989 (1989-10-11) & JP 01 172484 A (TATSUTA ELECTRIC WIRE & CABLE CO LTD), 7. Juli 1989 (1989-07-07) & DATABASE WPI Derwent Publications Ltd., London, GB;
- PATENT ABSTRACTS OF JAPAN vol. 1998, no. 09, 31. Juli 1998 (1998-07-31) & JP 10 087943 A (JAPAN SYNTHETIC RUBBER CO LTD), 7. April 1998 (1998-04-07) & DATABASE WPI Derwent Publications Ltd., London, GB;

## Beschreibung

Die Erfindung betrifft einen Gummiwerkstoff zur Schallisolation, wobei die vulkanisierte Kautschukmischung aus folgenden Bestandteilen besteht, nämlich:
- einem Kautschuk oder Kautschukverschnitt;
- einem Schwermetall und/oder dessen Legierungen und/oder dessen Oxide und/oder dessen Salze in Pulverform sowie
- üblichen Mischungsingredienzien.

Ein gattungsgemäßer Gummiwerkstoff ist beispielsweise aus der Patentschrift US-A-3 652 360 bekannt.

Die Schallisolation umfaßt die Schalldämmung und Schalldämpfung. Mit der Schalldämmung wird die Eigenschaft verknüpft, daß die einfallenden Wellen mehr oder weniger stark reflektiert werden und nur zu einem geringen Anteil durch den Werkstoff hindurchgelassen werden. Bei der Schalldämpfung wird Schwingungsenergie des Schalls in Wärmeenergie umgewandelt und somit dem Schwingungsvorgang irreversibel entzogen. Es wird daher ein hoher mechanischer Verlustfaktor vom Gummiwerkstoff gefordert.

Im Hintergrund der hier geschilderten physikalischen Teilvorgänge der Schallisolation besteht nun die Aufgabe darin, einen Gummiwerkstoff bereitzustellen, der sich bei hohem Gewicht (z.B. Flächengewicht) durch
- einen niedrigen Elastizitätsmodul (E-Modul),
- eine geringe Steifigkeit sowie durch
- einen hohen mechanischen Verlustfaktor auszeichnet.

Gelöst wird diese Aufgabe durch
- eine Kautschukmischung auf der Basis von
. Chlorbutylkautschuk (CIIR), Brombutylkautschuk (BIIR) oder Acrylatkautschuk (ACM), die jeweils unverschnitten sind; oder
. Nitrilkautschuk (NBR) oder Styrol-Butadien-Kautschuk (SBR), die jeweils mit epoxidiertem Naturkautschuk (ENR) verschnitten sind; wobei

- die Kautschukmischung folgende Mengenanteile aufweist:

| | |
|---|---|
| Kautschuk oder Kautschukverschnitt | 10-50 Gew.-% |
| Schwermetall und/oder dessen Legierungen und/oder dessen Oxide und/oder dessen Salze | 85 - 40 Gew.-% |
| Mischungsingredienzien | 5 - 10 Gew.-% |

Vorteilhafterweise wird ein Schwermetall der 4. Periode der Nebengruppenelemente verwendet. Hier wiederum ist die 8. Nebengruppe, umfassend Eisen (Fe), Kobalt (Co) und Nickel (Ni), von besonderer Bedeutung. In dieser hier genannten Gesamtgruppe von Schwermetallen sind auch deren Legierungen und/oder Oxide und/oder Salze ebenfalls zweckmäßige Mischungsbestandteile. Von besonderer Bedeutung ist dabei ein im wesentlichen reines Eisen oder eine Eisen-Kohlenstoff-Legierung (z.B. Grauguß) oder das Eisenoxid Fe₃O₄, ein Mischoxid aus FeO und Fe₂O₃.

Das Mengenverhältnis von NBR oder SBR zu ENR im Rahmen des jeweiligen Kautschukverschnittes beträgt 50 : 50 bis 90 : 10, insbesondere 70 : 30.

Das Schwermetall und/oder dessen Legierungen und/oder dessen Oxide und/oder dessen Salze weisen zweckmäßigerweise eine Korngröße von 10 bis 80 um, insbesondere 15 bis 45 µm, insbesondere wiederum 30 bis 40 µm, auf.

Die vorteilhaften Mengenanteile der Kautschukmischung sind:

| | |
|---|---|
| Kautschuk oder Kautschukverschnitt | 15 - 30 Gew.-% |
| Schwermetall und/oder dessen Legierungen und/oder dessen Oxide und/oder dessen Salze | 80-60 Gew.-% |
| Mischungsingredienzien | 5-10 Gew.-% |

Übliche Mischungsingredienzien sind zumeist: Vulkanisationsmittel (z.B. Schwefel oder Schwefelspender), Beschleuniger, Ruß, ZnO sowie gegebenenfalls Alterungsschutzmittel.

Der erfindungsgemäße Gummiwerkstoff wird vorteilhafterweise nach einem Verfahren hergestellt, das durch folgende Verfahrensschritte gekennzeichnet ist:
- die partielle Kautschukmischung, umfassend den Kautschuk oder Kautschukverschnitt sowie die üblichen Mischungsingredienzien, wird in einem Innenmischer hergestellt;
- die Kautschukmischung wird durch Mastifikation mittels Walzwerk für das Schwermetall und/oder dessen Legierungen und/oder dessen Oxide und/oder dessen Salze aufnahmebereit gemacht;
- über einen Walzenspalt wird das Schwermetall und/oder dessen Legierungen und/oder dessen Oxide und/oder dessen Salze in die Kautschukmischung eingemischt;
- die Gesamtmischung wird im Walzwerk homogenisiert;
- anschließend erfolgt die Vulkanisation der homogenisierten Gesamtmischung durch Wärmezufuhr in einer entsprechenden Preßform oder durch Kalandrieren mit anschließender Vulkanisation.

Im folgenden wird ein Vergleichsversuch beschrieben, wobei die beiden gegenüberstehenden Gummiwerkstoffe (A, B) auf der Basis BIIR bei gleicher Probengröße (Platte mit einer Fläche S von 0,09 m² und einer Dicke h von 3 mm) sich lediglich dadurch unterscheiden, daß der Gummiwerkstoff (B) 80 Gew.-% Fe-Pulver enthält, und zwar bei einer Korngröße von 30 bis 40 µm.

Die Meßkriterien und Meßwerte sind in folgender Tabelle festgehalten:

| Meßkriterien | A | B |
|---|---|---|
| E-Modul [MPa] bei T = 20°C | 5 | 30 |
| Spannungswert [N/mm²] bei 100 %-iger Dehnung | 1,16 | 0,87 |
| Mechanischer Verlustfaktor | 0,29 | 0,34 |
| Dichte p [kg/m³] | 1100 | 3500 |
| Flächengewicht M [kg/m²]; M = p h | 3,3 | 10,5 |

Im Vergleich zu dem Werkstoff (A) besitzt der erfindungsgemäße Werkstoff (B) zwar den 6-fachen höheren E-Modul. Entscheidend hier ist jedoch der Vergleich zu Stahl, der einen E-Modul von 2,1 x 10⁵ MPa aufweist. Der geforderte niedrige E-Modul ist somit gegeben.

In Verbindung mit der eingangs genannten Aufgabenstellung zeichnet sich ferner der erfindungsgemäße Gummiwerkstoff (B) im Vergleich zu dem Werkstoff (A) durch ein höheres Flächengewicht, eine geringere Steifigkeit (Spannungswert) sowie durch einen höheren mechanischen Verlustfaktor bei geringer Eigenerwärmung des Gummiwerkstoffes aus, da diesbezüglich die Wärmeleitfähigkeit durch das Fe-Pulver angehoben werden konnte. Eine Erhöhung der Belastbarkeit und der thermischen Stabilität des Gummiwerkstoffes ist somit gegeben.

Die Erfindung wird nun anhand von Ausführungsbeispielen unter Bezug auf schematische Zeichnungen und Diagramme erläutert. Es zeigen:
- Fig. 1: den Querschnitt eines plattenförmigen Gummiwerkstoffes ohne Zusatzwerkstoff;
- Fig. 2: den Querschnitt eines plattenförmigen Gummiwerkstoffes mit Zusatzwerkstoff unter Bildung eines Verbundsystemes;
- Fig. 3: ein Diagramm mit vier Versuchskurven.

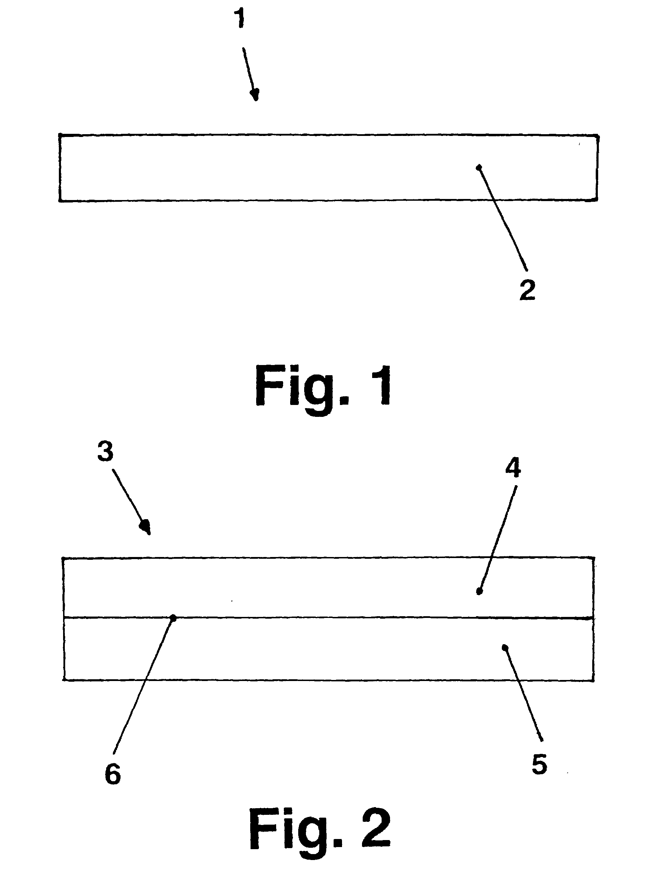

Nach Fig. 1 besteht die Elastomerplatte **1** lediglich aus dem erfindungsgemäßen Gummiwerkstoff **2**.

Im Gegensatz hierzu ist die Elastomerplatte **3** gemäß Fig. 2 ein Verbundsystem, umfassend den erfindungsgemäßen Gummiwerkstoff **4** und einen angebauten Zusatzwerkstoff **5**, der insbesondere ein hochporöser Schallabsorber ist, insbesondere wiederum auf der Basis eines gesinterten Metallfaservlieses. Der Zusatzwerkstoff kann auch ein Stahlblech sein. Im Bereich der Kontaktfläche **6** wird zwecks Zusammenhaltens des Verbundsystems ein entsprechendes Haftmittel verwendet.

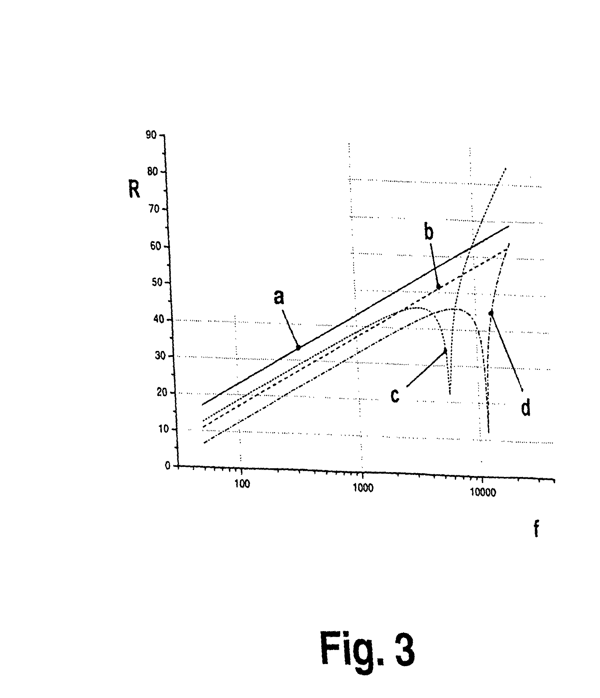

Fig. 3 zeigt nun ein Diagramm mit vier Versuchskurven **a, b, c** und **d** unter folgenden Meßkriterien:
- Ordinate:: Schallisolationsmaß R [dB]
- Abszisse:: Frequenz f [Hz]
- Kurve **a**:: Gummiwerkstoff auf Basis BIIR mit 80 Gew.-% Fe-Pulver bei einer Korngröße 30 bis 40 µm
Dicke h = 10 mm; Flächengewicht M = 35 kg/m²
- Kurve **b**:: Gummiwerkstoff (Kurve **a**)
Dicke h = 5 mm; Flächengewicht M = 17,5 kg/m²
- Kurve **c**:: Stahlblech
Dicke h = 2 mm; Flächengewicht M = 15,6 kg/m²
- Kurve **d**: Stahlblech
Dicke h = 1 mm; Flächengewicht M = 7,8 kg/m²

Die Kurven **a** und **b**, betreffend den erfindungsgemäßen Gummiwerkstoff, zeigen hinsichtlich des Schalldämmverhaltens einen linearen Verlauf im Frequenzbereich des Hörschalls, während bei Verwendung von Stahlblech (Kurven **c** und **d**) ein Dämmungseinbruch im Hörschallbereich auftritt. Mit dem erfindungsgemäßen Gummiwerkstoff wird ferner eine sehr hohe Grenzfrequenz (f_{g}) erreicht, die bei einem Flächengewicht M = 35 kg/m² bei etwa f_{g} = 100 kHz weit außerhalb des Hörschallbereiches liegt.

Im Rahmen des hier beschriebenen Gesamtversuches wurde ein im wesentlichen reines Fe-Pulver eingesetzt.

Ergänzende Versuche mit Grauguß und Fe₃O₄ bei ansonsten gleichen Bedingungen haben keine wesentlichen Änderungen des Datenniveaus erbracht.

## Patentansprüche

1. Gummiwerkstoff zur Schallisolation, wobei die vulkanisierte Kautschukmischung aus folgenden Bestandteilen besteht, nämlich:
- einem Kautschuk oder Kautschukverschnitt;
- einem Schwermetalt und/oder dessen Legierungen und/oder dessen Oxide und/oder dessen Salze in Pulverform sowie
- üblichen Mischungsingredienzien;
**gekennzeichnet durch**
- eine Kautschukmischung auf der Basis von
• Chlorbutylkautschuk, Brombutylkautschuk oder Acrylatkautschuk, die jeweils unverschnitten sind; oder
• Nitrilkautschuk oder Styrol-Butadien-Kautschuk, die jeweils mit epoxidiertem Naturkautschuk verschnitten sind; wobei
- die Kautschukmischung folgende Mengenanteile aufweist:
| | |
|---|---|
| Kautschuk oder Kautschukverschnitt | 10-50 Gew.-% |
| Schwermetall und/oder dessen Legierungen und/oder dessen Oxide und/oder Salze | 85 - 40 Gew.-% |
| Mischungsingredienzien | 5-10 Gew.-% |

2. Gummiwerkstoff nach Anspruch 1, **dadurch gekennzeichnet, daß** ein Schwermetall der 4. Periode der Nebengruppenelemente und/oder dessen Legierungen und/oder dessen Oxide und/oder dessen Salze beigemischt sind.

3. Gummiwerkstoff nach Anspruch 2, **dadurch gekennzeichnet, daß** ein Schwermetall der 8. Nebengruppe, umfassend Eisen, Kobalt sowie Nickel, und oder dessen Legierungen und/oder dessen Oxide und/oder dessen Salze beigemischt sind.

4. Gummiwerkstoff nach Anspruch 3, **dadurch gekennzeichnet, daß** ein im wesentlichen reines Eisen beigemischt ist.

5. Gummiwerkstoff nach Anspruch 3, **dadurch gekennzeichnet, daß** eine Eisen-Kohlenstoff-Legierung beigemischt ist.

6. Gummiwerkstoff nach Anspruch 3, **dadurch gekennzeichnet, daß** das Eisenoxid Fe₃O₄ beigemischt ist.

7. Gummiwerkstoff nach einem der Ansprüche 1 bis 6, **dadurch gekennzeichnet, daß** das Schwermetall und/oder dessen Legierungen und/oder dessen Oxide und/oder dessen Salze eine Korngröße von 10 bis 80 µm aufweisen.

8. Gummiwerkstoff nach Anspruch 7, **dadurch gekennzeichnet, daß** die Korngröße 15 bis 45 µm beträgt.

9. Gummiwerkstoff nach Anspruch 8, **dadurch gekennzeichnet, daß** die Korngröße 30 bis 40 µm beträgt.

10. Gummiwerkstoff nach einem der Ansprüche 1 bis 9, **dadurch gekennzeichnet, daß** das Mengenverhältnis von Nitrilkautschuk oder Styrol-Butadien-Kautschuk zum epoxidierten Naturkautschuk
50 : 50 bis 90 : 10
beträgt.

11. Gummiwerkstoff nach Anspruch 10, **dadurch gekennzeichnet, daß** das Mengenverhältnis von Nitrilkautschuk oder Styrol-Butadien-Kautschuk zum epoxidierten Naturkautschuk
70:30
beträgt.

12. Gummiwerkstoff nach einem der Ansprüche 1 bis 11, **dadurch gekennzeichnet, daß** die Kautschukmischung folgende Mengenanteile aufweist:
| | |
|---|---|
| Kautschuk oder Kautschukverschnitt | 15-30 Gew.-% |
| Schwermetall und/oder dessen Legierungen und/oder dessen Oxide und/oder dessen Salze | 80-60 Gew.-% |
| Mischungsingredienzien | 5-10 Gew,-% |

13. Gummiwerkstoff nach einem der Ansprüche 1 bis 12, **dadurch gekennzeichnet, daß** dieser ohne Anbau eines Zusatzwerkstoffes zum Einsatz kommt.

14. Gummiwerkstoff nach einem der Ansprüche 1 bis 12, **dadurch gekennzeichnet, daß** dieser unter Anbau eines Zusatzwerkstoffes unter Bildung eines Verbundsystemes zum Einsatz kommt.

15. Gummiwerkstoff nach Anspruch 14, **dadurch gekennzeichnet, daß** der Zusatzwerkstoff ein hochporöser Schallabsorber ist.

16. Gummiwerkstoff nach Anspruch 15, **dadurch gekennzeichnet, daß** der Zusatzwerkstoff ein gesintertes Metallfaservlies ist.

17. Gummiwerkstoff nach Anspruch 14, **dadurch gekennzeichnet, daß** der Zusatzwerkstoff ein Stahlblech ist.

18. Verfahren zum Herstellen eines Gummiwerkstoffes nach einem der Ansprüche 1 bis 17, **gekennzeichnet durch** folgende Verfahrensschritte:
- die partielle Kautschukmischung, umfassend den Kautschuk oder Kautschukverschnitt sowie die üblichen Mischungsingredienzien, wird in einem Innenmischer hergestellt;
- die Kautschukmischung wird **durch** Mastifikation mittels Walzwerk für das Schwermetall und/oder dessen Legierungen und/oder dessen Oxide und/oder dessen Salze aufnahmebereit gemacht;
- über einen Walzenspalt wird das Schwermetall und/oder dessen Legierungen und/oder dessen Oxide und/oder dessen Salze in die Kautschukmischung eingemischt;
- die Gesamtmischung wird im Walzwerk homogenisiert;
- anschließend erfolgt die Vulkanisation der homogenisierten Gesamtmischung **durch** Wärmezufuhr in einer entsprechenden Preßform oder **durch** Kalandrieren mit anschließender Vulkanisation.

## Claims

1. Rubber material for soundproofing, in which the vulcanised rubber mixture consists of the following constituents, namely:
- a rubber or rubber blend,
- a heavy metal and/or its alloys and/or its oxides and/or its salts in powder form, and
- conventional mixing ingredients,
**characterised by**
- a rubber mixture based on
• chlorbutyl rubber, bromobutyl rubber or acrylate rubber which in each case is unblended, or
• nitrile rubber or styrene-butadiene rubber, which in each case is blended with epoxydised natural rubber, in which
- the rubber mixture exhibits the following proportions:
| | |
|---|---|
| rubber or rubber blend | 10 - 50% by weight |
| heavy metal and/or its alloys and/or its oxides and/or salts | 85 - 40% by weight |
| mixing ingredients | 5 - 10% by weight |

2. Rubber material according to claim 1, **characterised in that** a heavy metal from the 4^{th} sub-class of the periodic table and/or its alloys and/or its oxides and/or its salts are added.

3. Rubber material according to claim 2, **characterised in that** a heavy metal from the 8^{th} sub-class, comprising iron, cobalt and nickel, and/or its alloys and/or its oxides and/or its salts are added.

4. Rubber mixture according to claim 3, **characterised in that** an essentially pure iron is added.

5. Rubber material according to claim 3, **characterised in that** an iron and carbon alloy is added.

6. Rubber material according to claim 3, **characterised in that** the iron oxide Fe₃O₄ is added.

7. Rubber material according to one of claims 1 to 6, **characterised in that** the heavy metal and/or its alloys and/or its oxides and/or its salts exhibit a grain size of 10 to 80 µm.

8. Rubber material according to claim 7, **characterised in that** the grain size is 15 to 45 µm.

9. Rubber material according to claim 8, **characterised in that** the grain size is 30 to 40 µm.

10. Rubber material according to one of claims 1 to 9, **characterised in that** the quantitative ratio of nitrile rubber or styrene-butadiene rubber to epoxydised natural rubber is 50 : 50 to 90 : 10.

11. Rubber material according to claim 10, **characterised in that** the quantitative ratio of nitrile rubber or styrene-butadiene rubber to expoxydised natural rubber is 70 : 30.

12. Rubber material according to one of claims 1 to 11, **characterised in that** the rubber mixture exhibits the following proportions:
| | |
|---|---|
| rubber or rubber blend | 15 - 30% by weight |
| heavy metal and/or its alloys and/or its oxides and/or salts | 80 - 60% by weight |
| mixing ingredients | 5 - 10% by weight |

13. Rubber material according to one of claims 1 to 12, **characterised in that** this is used without attaching any auxiliary material.

14. Rubber material according to one of claims 1 to 12, **characterised in that** this is used attaching an auxiliary material forming a sandwich system.

15. Rubber material according to claim 14, **characterised in that** the auxiliary material is a highly porous sound absorber.

16. Rubber material according to claim 15, **characterised in that** the auxiliary material is a sintered metal fibre fleece.

17. Rubber material according to claim 14, **characterised in that** the auxiliary material is a steel sheet.

18. Method for production of a rubber material according to one of claims 1 to 17, **characterised by** the following steps:
- the partial rubber mixture, comprising the rubber or rubber blend and the conventional mixing ingredients, is produced in a kneader;
- the rubber mixture is made ready to receive the heavy metal and/or its alloys and/or its oxides and/or its salts by mastication by means of a mill;
- the heavy metal and/or its alloys and/or its oxides and/or its salts are mixed into the rubber mixture through a roll gap;
- the complete mixture is homogenised in the mill;
- then the homogenised complete mixture is vulcanised by introducing heat in a corresponding press mould or by calendering with subsequent vulcanisation.

## Revendications

1. Matériau à base de caoutchouc pour isolation phonique, le mélange de caoutchouc vulcanisé étant composé des constituants suivants, à savoir:
- un caoutchouc ou une coupe de caoutchouc;
- un métal lourd et/ou ses alliages et/ou ses oxydes, et/ou ses sels, sous forme de poudre, ainsi que
- des ingrédients de mélange courants;
**caractérisé par** :
- un mélange de caoutchouc à base de
. caoutchouc chlorobutyle, caoutchouc bromobutyle, caoutchouc acrylate, qui sont à chaque fois non coupés; ou
. caoutchouc nitrile ou caoutchouc styrène-butadiène, qui sont à chaque fois coupés avec du caoutchouc naturel époxydé;
- le mélange de caoutchouc comportant en proportions les quantités suivantes:
| | |
|---|---|
| caoutchouc ou coupe de caoutchouc | 10 - 50 % en poids |
| métal lourd et/ou ses alliages et/ou ses oxydes et/ou ses sels | 85 - 40 % en poids |
| Ingrédients de mélange | 5 - 10 % en poids |

2. Matériau à base de caoutchouc selon la revendication 1, **caractérisé en ce qu'**on lui a ajouté un métal lourd de la 4ème période des éléments de groupe secondaire et/ou ses alliages et/ou ses oxydes et/ou ses sels.

3. Matériau à base de caoutchouc selon la revendication 2, **caractérisé en ce qu'**on lui a ajouté un métal lourd du 8^{ème} Groupe secondaire, comprenant le fer, le cobalt et le nickel et/ou leurs alliages et/ou leurs oxydes et/ou leurs sels.

4. Matériau à base de caoutchouc selon la revendication 3, **caractérisé en ce qu'**on lui a ajouté un fer pratiquement pur.

5. Matériau à base de caoutchouc selon la revendication 3, **caractérisé en ce qu'**on lui a ajouté un alliage fer-carbone.

6. Matériau à base de caoutchouc selon la revendication 3, **caractérisé en ce qu'**on lui a ajouté de l'oxyde de fer Fe₃O₄.

7. Matériau à base de caoutchouc selon l'une quelconque des revendications 1 à 6, **caractérisé en ce que** le métal lourd et/ou ses alliages et/ou ses oxydes et/ou ses sels ont une granulométrie de 10 à 80 µm.

8. Matériau à base de caoutchouc selon la revendication 7, **caractérisé en ce que** sa granulométrie est de 15 à 45 µm.

9. Matériau à base de caoutchouc selon la revendication 8, **caractérisé en ce que** sa granulométrie est de 30 à 40µm.

10. Matériau à base de caoutchouc selon l'une quelconque des revendications 1 à 9, **caractérisé en ce que** le rapport quantitatif du caoutchouc nitrile ou du caoutchouc styrène-butadiène au caoutchouc naturel époxydé est
50/50 à 90/10.

11. Matériau à base de caoutchouc selon la revendication 10, **caractérisé en ce que** le rapport quantitatif du caoutchouc nitrile ou du caoutchouc styrène-butadiène au caoutchouc naturel époxydé est
70/30

12. Matériau à base de caoutchouc selon l'une quelconque des revendications 1 à 11, **caractérisé en ce que** le mélange à base de caoutchouc comprend en proportions les quantités suivantes:
| | |
|---|---|
| caoutchouc ou coupe de caoutchouc | 15 - 30 % en poids |
| métal lourd et/ou ses alliages et/ou ses oxydes et/ou ses sels | 80 - 60 % en poids |
| ingrédients de mélange | 5 - 10 % en poids. |

13. Matériau à base de caoutchouc selon l'une quelconque des revendications 1 à 12, **caractérisé en ce qu'**on utilise celui-ci sans addition d'un matériau additif.

14. Matériau à base de caoutchouc selon l'une quelconque des revendications 1 à 12, **caractérisé en ce qu'**on utilise ce dernier avec addition d'un matériau additif avec formation d'un système composite.

15. Matériau à base de caoutchouc selon la revendication 14, **caractérisé en ce que** le matériau additif est un absorbeur de son très poreux.

16. Matériau à base de caoutchouc selon la revendication 15, **caractérisé en ce que** le matériau additif est une nappe de fibres métalliques frittées.

17. Matériau à base de caoutchouc selon la revendication 14, **caractérisé en ce que** le matériau additif est une tôle d'acier.

18. Procédé pour la fabrication d'un matériau à base de caoutchouc selon l'une quelconque des revendications 1 à 17, **caractérisé par** les phases suivantes:
- fabrication, dans un mélangeur interne, du mélange à base de caoutchouc partiel comprenant le caoutchouc ou la coupe de caoutchouc ainsi que les autres ingrédients de mélange courants,
- préparation du mélange de caoutchouc par mastication au moyen d'un laminoir pour l'introduction du métal lourd et/ou de ses alliages et/ou de ses oxydes et/ou de ses sels,
- introduction, par un espace entre cylindres, du métal lourd et/ou de ses alliages et/ou de ses oxydes et/ou de ses sels dans le mélange de caoutchouc,
- homogénéisation du mélange complet dans le laminoir,
- ensuite vulcanisation du mélange complet homogénéisé par apport de chaleur dans un moule de compression correspondant ou par calandrage suivi d'une vulcanisation.
